# EUROPÄISCHE PATENTANMELDUNG

(11) **EP 4 733 596 A1**
(43) Veröffentlichungstag der Anmeldung: **29.04.2026**
(21) Anmeldenummer: 25208323.3
(22) Anmeldetag: 13.10.2025
(51) Int. Cl.: F04D 13/06, F04D 29/62, H02K 15/12, F04D 29/42

(54) **ELEKTRISCHE PUMPE MIT VAKUUMIMPRÄGNIERTEN GEHÄUSE UND STATIONÄRER LAUFACHSE**

(30) Priorität: 25.10.2024 DE 102024131166
(71) Anmelder: NIDEC GPM GmbH, 98673 Auengrund /OT Merbelsrod (DE)
(72) Erfinder: PAWELLEK, Franz, 96486 Lautertal (DE)
(74) Vertreter: Lenzing Gerber Stute

(57) **Zusammenfassung**

Die Erfindung betrifft eine elektrische Pumpe aufweisend ein Motorgehäuse (3), einen in dem Motorgehäuse (3) liegenden Stator (2) und eine von dem Stator (2) umfangseitig umgebende Rotorbaugruppe (33), wobei das Motorgehäuse (3) vakuumimprägniert ist und die Rotorbaugruppe (33) von einer stationären Laufachse (32) durchsetzt ist, die in das Motorgehäuse (3) oder in eine mit dem Motogehäuse (3) verbundene Versteifungsscheibe (15,40) eingepresst ist.

## Beschreibung

Die vorliegende Erfindung betrifft eine elektrische Pumpe mit den Merkmalen des Oberbegriffs des Anspruchs 1 sowie eine Verwendung der elektrischen Pumpe als Kühlmittelpumpe in einem Fahrzeug.

Elektrische Kühlmittelpumpen können in Fahrzeugen mit Verbrennungsmotor über Hybrid- und Elektrofahrzeuge bis hin zu Modellen mit Brennstoffzellenantrieb eingesetzt werden. Sie optimieren mit ihrer Kühlung das Thermomanagement.

Für diese Einsatzzwecke ist es bekannt, elektrische Kühlmittelpumpen mit Spalttopf einzusetzen. Üblicherweise wird ein Kunststoff-Spalttopf, der typischerweise eine Wanddicke von 1 mm aufweist eingesetzt. Der magnetische Luftspalt ist dadurch sehr groß. Aufgrund der resultierenden Feldverluste muss der Motor größer und teurer ausgeführt werden als ein Motor mit kleinerem Luftspalt. Der Kunststoff-Spalttopf wirkt zudem als Isolator und behindert die Abfuhr der Verlustwärme aus dem Stator in das Kühlmittel. Es sind auch metallische Spalttöpfe mit guter Wärmeableitung bekannt, diese ziehen jedoch beträchtliche Wirbelstromverluste nach sich.

Der Stator des Elektromotors der elektrische Kühlmittelpumpen kann beispielsweise durch Überspritzung ausgebildet sein. Nachteilig ist aber, dass die Überspritzung einen hohen Werkzeugaufwand, speziell bei Verwendung verschiedener Blechpakethöhen erfordert.

Bei der Herstellung von elektrischen Motoren ist das Imprägnieren von Statoren ein gängiger Prozess zur Stabilisierung der Wicklungen und zur Verbesserung der Wärmeableitung aus dem Stator in das Kühlmedium. Das Imprägniermittel dringt dabei auch in Hohlräume ein, aber trägt auch auf und verändert die Dimensionen des Stators. Während der Aushärtung kommt es daneben zur Ausbildung von Tropfnasen, die z. B. das Einpressen des Stators in ein Gehäuse erschweren können.

Es ist Aufgabe der vorliegenden Erfindung, eine elektrische Pumpe anzugeben, die besonders einfach und kostengünstig herstellbar ist.

Diese Aufgabe wird von einer elektrischen Pumpe mit den Merkmalen des Anspruchs 1 gelöst.

Demnach ist eine elektrische Pumpe aufweisend ein Motorgehäuse, einen in dem Motorgehäuse liegenden Stator und eine von dem Stator umfangseitig umgebende Rotorbaugruppe, vorgesehen, wobei das Motorgehäuse zumindest teilweise vakuumimprägniert ist und die Rotorbaugruppe von einer stationären Laufachse durchsetzt ist, die in das Motorgehäuse oder in eine mit dem Motogehäuse verbundene Versteifungsscheibe eingepresst ist.

Das Einpressen der Laufachse in das Motorgehäuse ist ein vergleichsweise robuster Montageprozess, der größere Toleranzen und höhere Einpresskräfte zulässt. Durch das Vakuumimprägnieren des Motorgehäuses besteht Korrosionsschutz des Gehäuses gegenüber äußeren und inneren korrosiven Einflüssen und es können kostengünstige, unbeschichtete Werkstoffe verwendet werden.

Vorzugsweise ist das Motogehäuse mittels Tiefziehen, insbesondere aus Stahlblech hergestellt und somit besonders kostengünstig ohne zerspanende Nacharbeit herstellbar.

Es ist besonders vorteilhaft, wenn das Motorgehäuse und der Stator als Baugruppe vakuumimprägniert sind. Dadurch das die Baugruppe gesamtheitlich vakuumimprägniert wird, bestehen keine Probleme beim Einsetzen des Stators in das Gehäuse aufgrund unbestimmter Dimensionen des Schichtaufbaus des Imprägniermittels, wie dies beim Imprägnieren von Statoren vorkommt. Eine herkömmliche Statorumspritzung kann entfallen.

Dennoch besteht eine elektrische Isolation des bewickelten Stators gegenüber einem Kühlmedium beim Einsatz in einer elektrischen Kühlmittelpumpe. Außerdem können mittels des Imprägniermittels die Wicklungen des Stators und vorhandene Blechlamellen verklebt werden, was zu einer Verbesserung der Akustik und der Wärmeableitung führt. Beim Vakuumimprägnieren der gesamten Baugruppe wird zudem eine betriebsfeste Fixierung des Stators im Gehäuse erzielt. Außerdem entsteht durch den Klebeverbund des Stators mit dem Gehäuse eine Versteifung des dünnwandigen Gehäuses und die Verwendung eines dickwandigen und schweren Gehäuses kann vermieden werden.

Bevorzugt wird der Stator in dem Gehäuse mittels Schweißen, Verstemmen oder Einpressen befestigt. Beim Verstemmen kann das Gehäuse von außen in Nuten der Isolatoren des Stators gedrückt werden.

Vorzugsweise weist die Pumpe eine Rotorbaugruppe auf, die innerhalb des Stators drehbar auf der Laufachse gelagert ist, wobei die Rotorbaugruppe ein Flügelrad und einen Magnetrotor umfasst. Das Flügelrad kann dabei einstückig mit einen Rotoradapter ausgebildet sein, an dem ein Rotormagnet, insbesondere Ferrit-Ringmagnet befestigt ist. Am lagersitz fernen Ende weist der Rotoradapter bevorzugt eine Aufnahme auf, in die eine axiale Anlaufscheibe eingepresst ist. Ein Spiralgehäuse ist bevorzugt an dem Motorgehäuse, beispielsweise mittels Zentrierhülsen, befestigt. Es kann vorgesehen sein, dass das Motorgehäuse von einem Steckergehäuse umgeben ist. Das Steckergehäuse ist bevorzugt ein mittels Tiefziehen hergestelltes Aluminiumgehäuse. In dem Steckergehäuse kann eine Leiterplatte untergebracht sein. Die Leiterplatte ist bevorzugt über ein Wärmeleitpad an die Außenseite des Bodens des Gehäuses angeschlossen, und kann somit gut entwärmt werden. Die aus dem Motorgehäuse herausgeführten Wicklungsdrahtenden sind bevorzugt an der Leiterplatte elektrisch kontaktiert. Das Steckergehäuse weist vorzugsweise eine Steckergeometrie und darin liegende elektrische Kontakte auf, die mit der Leiterplatte verbunden sind.

Der Stator weist bevorzugt Blechlamellen auf, aus denen einzelne Statorkernsegmente gebildet sind, um die Spulen aus Wicklungsdrähten gewickelt sind. Die Wicklungsdrahtenden werden bevorzugt durch Öffnungen aus dem Gehäuseboden zur unmittelbaren Kontaktierung mit einer Leiterplatte herausgeführt. Der Gehäuseboden weist bevorzugt Einführfasen zur Ausrichtung der Wicklungsdrahtenden auf. In diesem Fall kann auf eine Stromschieneneinheit (Busbar) verzichtet werden.

In einer Ausführungsform ist das Gehäuse topfförmig mit einem Boden und einer zylindrischen Mantelfläche und der Boden hat eine zentrale Vertiefung mit einer durchsetzenden Öffnung, wobei die Laufachse in den durch die Vertiefung gebildeten Sitz eingepresst ist.

In einer anderen Ausführungsform ist das Gehäuse topfförmig mit einem Boden und einer zylindrischen Mantelfläche, wobei der Boden eine zentrale durchsetzende Öffnung aufweist, wobei eine Versteifungsscheibe auf der Außenseite des Bodens liegt und mit einem kreisringförmigen Vorsprung in die Öffnung und in das Innere des Gehäuses ragt, und wobei die Innenseite des kreisringförmigen Vorsprungs einen Sitz ausbildet, in den die Laufachse eingepresst ist. Der Boden wird mittels der Versteifungsscheibe verstärkt und die Versteifungsscheibe nimmt die beim Einpressen der Laufachse auftretenden Kräfte auf.

In einer weiteren Ausführungsform ist das Gehäuse topfförmig mit einem Boden und einer zylindrischen Mantelfläche, wobei der Boden eine zentrale durchsetzende Öffnung aufweist, wobei eine Versteifungsscheibe an der Innenseite des Bodens liegt und einen nach innen ragenden kreisringförmigen Vorsprung aufweist, und wobei die Innenseite des kreisringförmigen Vorsprungs einen Sitz ausbildet, in den die Laufachse eingepresst ist. Auch in diesem Fall wird der Boden mittels der Versteifungsscheibe verstärkt und die Versteifungsscheibe nimmt die beim Einpressen der Laufachse auftretenden Kräfte auf.

Die Versteifungsscheibe kann eine Sinterscheibe aus porösem Material oder eine Aluminiumscheibe sein.

Vorzugsweise weist die Versteifungsscheibe mittig des kreisringförmigen Vorsprungs eine durchsetzende Öffnung auf, insbesondere ist die Öffnung korrespondierend zu der Öffnung im Boden ausgebildet.

Es ist besonders vorteilhaft, wenn der Sitz frei von Imprägniermittel gehalten ist. Das Einpressen erfolgt dann mit einer höheren Genauigkeit und Prozesssicherheit.

Der magnetische Luftspalt kann kleiner 0,6 mm, insbesondere etwa 0,5 mm, sein, wodurch der Motor und damit einhergehend die elektrische Pumpe besonders kompakt ausgebildet sein kann. Auf einen Spalttopf kann verzichtet werden.

Vorzugsweise sind mittels Kontaktierung der Laufachse das Gehäuse und der Stator gemeinsam geerdet. Damit ist ein wirksamer Schutz gegen elektrostatische Entladung (ESD) und elektromagnetische (EM) Abstrahlung des Motors möglich ist.

Das Imprägniermittel ist bevorzugt ein Harz aus der Epoxid-Familie. Die Imprägnierschicht ist bevorzugt kleiner 0,04 mm, wodurch ein möglichst kleiner magnetischer Luftspalt zwischen Stator und Rotor möglich ist.

Außerdem ist eine Verwendung der zuvor beschriebenen elektrischen Pumpe als Kühlmittelpumpe in einem Fahrzeug, bevorzugt in einem batterieelektrischen Fahrzeug (BEV), Hybrid-Elektrofahrzeug (HEV), Fahrzeug mit Verbrennungsmotor (ICE), und/oder Brennstoffzellen-Fahrzeug (FCV) vorgesehen. Die elektrische Kühlmittelpumpe kann mit Ihrer Kühlung das Thermomanagement optimieren.

Bevorzugt hat die Kühlmittelpumpe eine Leistung in einem Bereich von 50W bis 600W, insbesondere zwischen 100W und 300W. Vorzugsweise handelt es sich um eine 12V Pumpe.

Nachfolgend wird ein Ausführungsbeispiel der vorliegenden Erfindung anhand der Zeichnungen näher beschrieben. Gleiche Bauteile oder Bauteile mit gleichen Funktionen tragen gleiche Bezugszeichen. Es zeigen:
- Figur 1:: einen Längsschnitt durch eine Baugruppe bestehend aus Stator und Gehäuse beim Vakuumimprägnieren,
- Figur 2:: einen Längsschnitt einer Baugruppe mit Stopfen,
- Figur 3:: eine Detailansicht eines Drahtdurchzugs durch das Gehäuse,
- Figur 4:: einen Längsschnitt durch eine elektrische Kühlmittelpumpe,
- Figur 5:: einen Längsschnitt durch eine Baugruppe einer weiteren Ausführungsform bestehend aus Stator und Gehäuse und eine Draufsicht auf einen Stator mit Gehäuse, sowie
- Figur 6:: einen Längsschnitt durch eine elektrische Kühlmittelpumpe mit der in Figur 5 dargestellten Baugruppe.

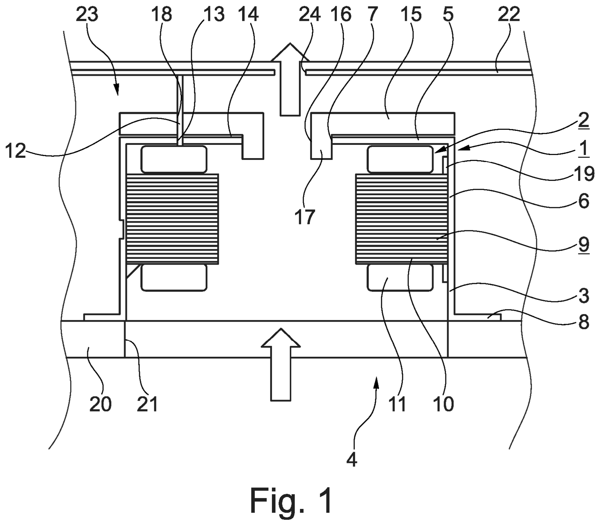

In der Figur 1 ist eine Baugruppe 1 aus einem Stator 2 und einem Gehäuse 3 in einer Vakuumimprägnieranlage 4 dargestellt. Das Gehäuse 3 ist topfförmig mit einem Boden 5 und einer kreiszylindrischen Mantelfläche 6 ausgebildet. Mittig in dem Boden 5 ist eine durchsetzende Ausnehmung 7 vorgesehen. Die Mantelfläche 6 ist an ihrem bodenfernen Ende nach außen abgekantet. Die Abkantung 8 bildet einen Flansch aus. Das Gehäuse 3 des Elektromotors ist vorzugsweise in dünnwandigem Blech, insbesondere Stahlblech ausgeführt und mittels Tiefziehen ausgebildet. Blechgehäuse bieten den Vorteil einer ähnlichen Wärmedehnung wie das Blechpaket 9 des Stators 2, eine höhere Präzision, eine bessere elektromagnetische Abschirmung, bessere Wärmeleitung, höhere Festigkeit, sowie geringeren CO₂-Fußabdruck.

Das Gehäuse 3 kann jedoch auch aus kostengünstigen Kunststoffen hergestellt sein. Kunststoffgehäuse bieten den Vorteil geringerer Werkstoffkosten, da auch nicht-kühlmittelbeständige Kunststoffe eingesetzt werden können.

Der Stator 2 weist das Blechpaket 9 auf, das aus einer Vielzahl von miteinander gleichen Blechlamellen 10, die durch Stanzen hergestellt werden und die zu dem Blechpaket 9 deckungsgleich aufgeschichtet werden besteht. Die geschichteten an ihren aneinander anliegenden Seiten gegeneinander isolierten Blechlamellen 10 werden mechanisch und elektrisch mit einander verknüpft. Die gestapelten Blechlamellen 10 weisen am inneren Rand hier nicht dargestellte Nuten zur Aufnahme einer Wicklung 11 auf. Ein dargestelltes Ende 12 einer Wicklung 11 wird durch eine durchsetzende Öffnung 13 im Boden 5 des Gehäuses 3 nach draußen geführt. Die Öffnung 13 weist auf der Innenseite eine Einführfase auf, mittels der das Wicklungsende 12 beim Einführen in die Öffnung 13 ausgerichtet wird. Die Wicklungstopologie des Stators 2 gibt die Anzahl der Wicklungsende vor. Bevorzugt ist pro Motorphase ein Wicklungsende vorgesehen.

In der dargestellten Ausführungsform der Baugruppe 1 ist auf der Unterseite 14 des Bodens 5 (in der Figur 1 oberhalb) eine Versteifungsscheibe 15 angeordnet. Die Versteifungsscheibe 15 ist bevorzugt eine Sinterscheibe aus porösem Material oder eine Aluminiumscheibe. In der Mitte der Versteifungsscheibe 15 ist eine Öffnung 16 mit einem erhöhten Rand 17 vorgesehen, was einen Lagersitz für eine nicht dargestellte Achse ausbildet. Der Rand 17 ist derart konstruiert, dass er in die Öffnung 7 in dem Boden 5 des Gehäuses 3 eingreift und sich bis in das Innere des Gehäuses 3 erstreckt. In der Versteifungsscheibe 15 ist zudem eine Öffnung 18 zur Durchführung des Wicklungsendes 12 vorgesehen. Bei der Baugruppenmontage werden zunächst die Wicklungsenden 12 (Phasendrähte) durch die Öffnungen 13,18 in dem Gehäuseboden 5 und der Versteifungsscheibe 15 gezogen und dabei lagerichtig ausgerichtet. Dadurch kann im weiteren Verlauf eine separate Stromschiene eingespart werden. Die Wicklungsenden 12 sind parallel zu einer Längsachse der Baugruppe 2 ausgerichtet.

Vor dem Vakuumimprägnieren ist der Stator 2 auf der Innenseite der Mantelfläche 6 des Gehäuses 3 befestigt. Der bewickelte Stator 2 wird mit Übergangspassung gegen einen Anschlag 19 geschoben und fixiert. Dies kann durch Schweißen oder durch Einsetzen des Stators 2 zwischen radial nach innen vorstehenden Sicken in der Mantelfläche 6 erfolgen. Es ist auch denkbar, dass der Stator mit dem Gehäuse verstemmt wird. Auf diese Befestigungsmöglichkeit wird weiter unten im Detail eingegangen.

Die Vakuumimprägnieranlage 4 weist eine Grundplatte 20 auf, auf der die Baugruppe 2 mit dem Flansch des Gehäuses 3 aufsteht. Die Grundplatte 20 weist eine Öffnung 21 auf, die an den Innendurchmesser des Gehäuses 3 im Bereich der Mantelfläche 6 angepasst ist. Die Grundplatte 20 bildet zusammen mit einer Abdeckung 22 eine Imprägnierkammer 23 aus. Aus einem unterhalb der Grundplatte 20 befindlichen Vorratsbehälter wird das Imprägniermittel in die Imprägnierkammer 23, wie von den Pfeilen symbolisch dargestellt, eingeleitet. Die Öffnung 21 in der Grundplatte 20 fungiert dabei als Eintrittsöffnung. In der die Baueinheit 1 umgebenden Abdeckung 22 ist eine Austrittsöffnung 24 vorgesehen. Eine nicht dargestellte Vorrichtung zum Evakuieren der Imprägnierkammer, beispielsweise ein Vakuumpumpensystem, sorgt für den erforderlichen Unterdruck relativ zum Umgebungsdruck. Dies geschieht vorzugsweise dadurch, dass die Imprägnierkammer 23 beim Imprägniervorgang permanent evakuiert wird. Alternativ kann die Imprägnierkammer 23 aber auch mittels eines Ventils nur bei Bedarf, z. B. bei Überschreiten eines vorbestimmten Maximaldruckwertes an eine Vorrichtung zum Evakuieren der Imprägnierkammer 23 angeschlossen werden und ansonsten davon getrennt werden. Das Ventil wird dann vorzugsweise mit einer entsprechenden Regelung zum druckabhängigen Öffnen oder Schließen des Ventils ausgestattet.

Das Imprägniermittel ist bevorzugt ein Harz aus der Epoxid-Familie. Die mit Harz in Kontakt kommenden Oberflächen der Vakuumimprägnieranlage 4 sind aus einem Kunststoff gefertigt, an welchem das Harz nicht haftet (PE, PA, PP, PC...). Die Baugruppe 1 wird hingegen von dem Imprägniermittel vollständig benetzt. Infolge der Kapillarkräfte kriecht das Imprägniermittel auch in engste Spalte, wodurch folgende Wirkungen erzielt werden:
- Verklebung des Stators 2 mit dem Gehäuse 3,
- Verklebung der Blechlamellen 10 und der Wicklungen 11 des Stators 2,
- Verkleben der Versteifungsscheibe 15 mit dem Gehäuse 3,
- Abdichtung der Öffnungen 13,18 zur Wicklungsdrahtendendurchführung, und
- Korrosionsschutz und elektrische Isolation durch Beschichtung aller Oberflächen.

Beim Vakuumimprägnieren wird die Vakuumimprägnieranlage 4 bevorzugt zwischen 40mbar und 60mbar für 11 min bis 18 min betrieben. Danach erfolgt ein Aushärten bei Umgebungsdruck und einer Temperatur in einem Bereich zwischen 150°c und 180°C für mindestens 2 Stunden, insbesondere mindestens 3,5 Stunden.

Die unvermeidlichen Tropfnasen werden durch das Vakuumimprägnieren der gesamten Baueinheit 1 an Stellen ausgebildet, an denen sie nicht stören.

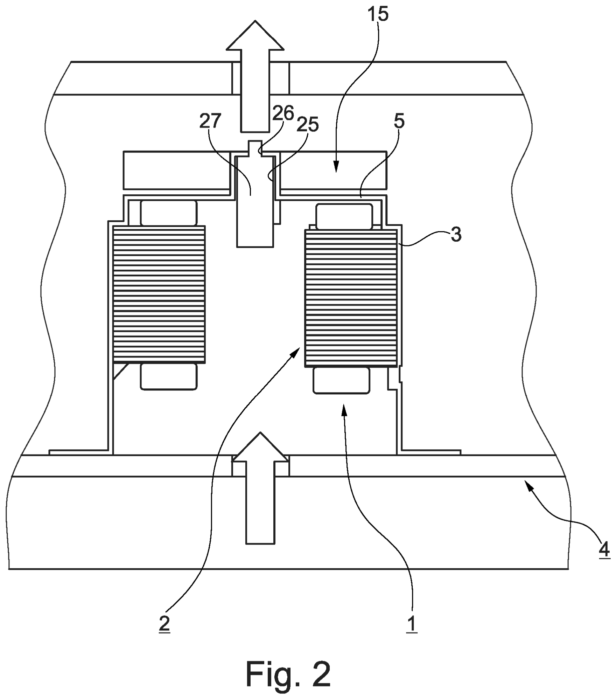

Figur 2 zeigt eine Baugruppe 1 aus Stator 2 und Gehäuse 3 in einer Vakuumimprägnieranlage 4. Im Gegensatz zu der Ausführungsform der Figur 1 weist das Gehäuse 3 im Boden 5 eine mittige Vertiefung 25 auf, die einen Sitz für eine Achse ausbildet. Zentral in der Vertiefung 25 ist eine Öffnung 26 im Boden 5 vorgesehen. Damit in die Vertiefung 25 die Achse einfach und präzise eingepresst werden kann, wird beim Vakuumimprägnieren die Vertiefung 25 mit einem Stopfen 27, bevorzugt aus Gummi abgedichtet. So kann verhindert werden, dass das Imprägniermittel in die Vertiefung 25 gelangt und das gewünschte Bohrungsmaß für das Einpressen der Achse bzw. die präzise Geometrie aus dem Tiefziehprozess in diesem Bereich bleibt erhalten. Dadurch wird eine präzise Pressverbindung für die nicht dargestellte Achse möglich.

Im Gegensatz zu der Ausführungsform aus Figur 1 ist die Versteifungsscheibe 15 plan ausgebildet und umgibt die Vertiefung 25 umfangseitig, so dass die Versteifungsscheibe 15 die beim Einpressen der Achse in die Vertiefung auftretenden Kräfte aufnehmen kann.

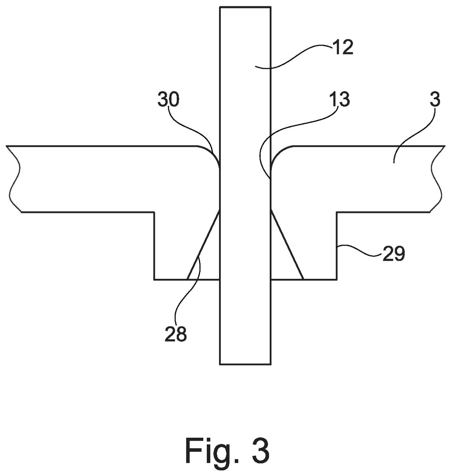

In der Figur 3 ist im Detail die Öffnung 13 im Gehäuse 3 sowie das durchgeführte Wicklungsdrahtende 12 dargestellt. Die oben beschriebene Einführfase 28 ist auf der Innenseite ausgebildet und um die Öffnung 13 herum springt das Gehäuse 3 nach innen vor. Die Tiefe der Einführfase 28 entspricht in etwa der Höhe des Vorsprungs 29. Auf der Außenseite ist um die Öffnung 13 herum im Gehäuse 3 eine Vertiefung 30 vorgesehen, in der sich das Imprägniermittel beim Vakuumimprägnieren sammelt, so dass während der Aushärtung ein Imprägniermittel-Depot entsteht, wodurch eine gute Abdichtung sichergestellt ist.

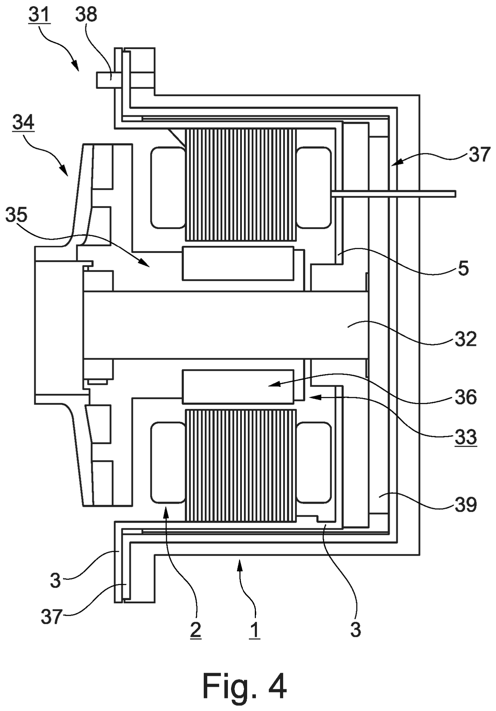

Figur 4 zeigt einen Teil einer exemplarischen elektrischen Kühlmittelpumpe 31 mit der Baugruppe 1 aus Gehäuse 3 und Stator 2. In den zentralen Sitz im Boden 5 des Gehäuses 3 ist eine Laufachse 32 eingepresst. Das Einpressen der Laufachse auf kurzer Länge in das Motorgehäuse ist ein vergleichsweise robuster Montageprozess, der größere Toleranzen und höhere Einpresskräfte zulässt.

Auf der Laufachse 32 ist eine Rotorbaugruppe 33 drehbar gelagert. Der Stator 2 umgibt somit umfangseitig die Rotorbaugruppe 33. Die Rotorbaugruppe 33 umfasst ein Flügelrad 34 und einen Magnetrotor 35 mit auf der Außenseite eingelassenem Ferrit-Ringmagnet 36. Der Magnetrotor 35 ist drehbar auf der Laufachse 32 gelagert. Der Magnetrotor 35 und das Flügelrad sind einstückig ausgebildet. Am lagersitz fernen Ende weist der Magnetrotor 35 eine Aufnahme auf, in die eine axiale Anlaufscheibe eingepresst ist.

Das Gehäuse 3 des Motors und ein nicht dargestelltes Spiralgehäuse sowie ein Steckergehäuse 37 sind mittels Zentrierhülsen 38 zueinander ausgerichtet. Das Steckergehäuse 37 ist bevorzugt ein mittels Tiefziehen hergestelltes Aluminiumgehäuse. In dem Steckergehäuse 37 liegen eine Leiterplatte 39, sowie die Baueinheit 1 mit der Versteifungsscheibe 15. Die Leiterplatte 39 ist über ein Wärmeleitpad an die Außenseite des Bodens des Gehäuses angeschlossen, und kann somit gut entwärmt werden.

Die Laufachse ist bevorzugt metallisch und kann für eine effektive Erdung des Stators verwendet werden. Wie zu Figur 2 beschrieben bleibt bei Verwendung eines Stopfens beim Vakuumimprägnieren die Vertiefung elektrisch leitend, was für die elektromagnetische Abschirmung, eine mögliche gesamtheitliche Erdung und die Wärmeleitung von Vorteil ist. Mit der Ausbildung eines nicht dargestellten Massepins an der Laufachse 32 können so Gehäuse 3, Stator 2 und Laufachse 32 gemeinsam geerdet werden, wodurch ein wirksamer Schutz gegen elektrostatische Entladung (ESD) und elektromagnetische (EM) Abstrahlung des Motors möglich ist.

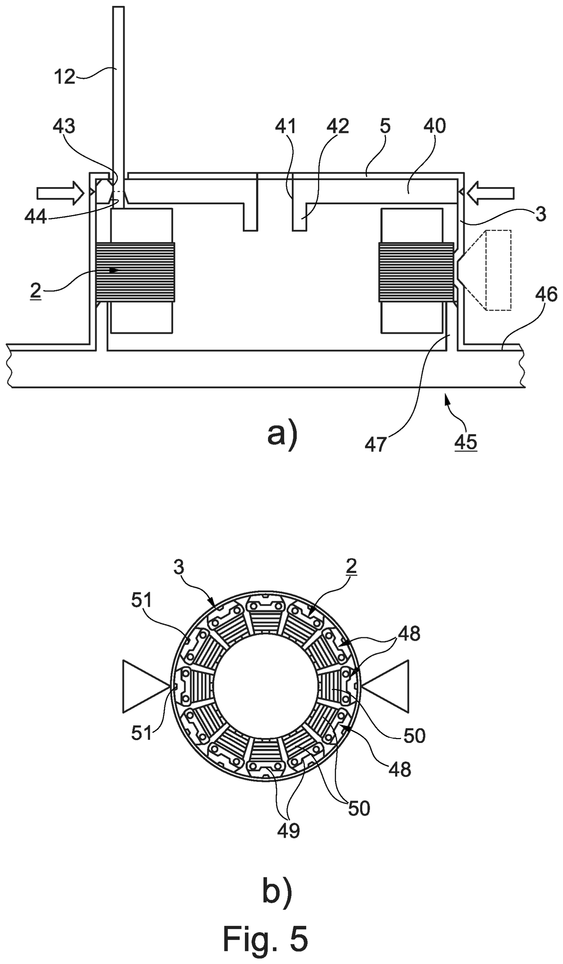

In der Figur 5 ist eine weitere mögliche Ausführungsform dargestellt. Im Gegensatz zu den vorherigen Ausführungsformen ist, wie in Figur 5 a) gezeigt eine Versteifungsscheibe 40 im Inneren des Gehäuses 3 vorgesehen. Die Versteifungsscheibe 40 liegt in Anlage mit dem Boden 5 des Gehäuses 3. Die Versteifungsscheibe 40 hat mittig eine Öffnung 41 und einen die Öffnung 41 umgebenden erhöhten Rand 42, der sich nach innen in das Gehäuse 3 erstreckt, was einen Lagersitz für eine nicht dargestellte Achse ausbildet. Die Öffnung 41 ist deckungsgleich mit der Öffnung 7 im Boden 5 des Gehäuses 3. Die Versteifungsscheibe 40 weist zusätzlich eine Öffnung 43 zur Durchführung der Wicklungsdrahtenden 12 auf. Die Wicklungsdrahtenden 12 sind durch eine in der Öffnung 43 ausgebildete Einführfase 44 parallel zur Längsachse der Baugruppe ausgerichtet. Die Versteifungsscheibe 40 wird in dem Gehäuse 3 durch diametrales Verstemmen gehalten. Das Verstemmen ist durch die Pfeile symbolisch dargestellt. Das Gehäuse 3 und die darin liegende Versteifungsscheibe 40 werden von außen miteinander mittels Körner verstemmt.

In der dargestellten Ausführungsform wird der Stator 2 auf eine Positioniervorrichtung 45 aufgelegt und das Gehäuse 3 darüber gesetzt und ebenfalls auf der Positioniervorrichtung 45 abgesetzt. Die Positioniervorrichtung 45 weist eine ebene plane Fläche 46 auf und einen darauf befindlichen kreisringförmigen Vorsprung 47 auf. Zur Positionierung des Stators 2 liegt dieser auf dem Vorsprung 47 auf und das Gehäuse 3 wird auf der ebenen Fläche 46 abgestellt. Die Lage des Stators 2 im Gehäuse 3 in der Tiefe ist somit durch die Höhe des Vorsprungs 47 definiert. Nachdem der Stator 2 und das Gehäuse 3 auf der Positioniervorrichtung 45 abgelegt wurden, werden beide Teile 2,3 von außen mittels Körner diametral miteinander verstemmt (schematisch auf der rechten Seite der Figur 5 a) gezeigt).

Wie in der Figur 5 b) dargestellt, weist der Stator 2 eine Mehrzahl von Statorkernsegmenten 48 auf, denen jeweils ein Isolator 49 zugeordnet ist. Um die Anker ausbildende Statorkernsegmente 48 und Isolatoren 49 sind rein schematisch dargestellte Spulen 50 aus Wicklungsdrähten gewickelt. Die Darstellung gibt die Wicklungstopologie nicht wieder. Die Isolatoren 49 weisen jeweils mittig eines Statorkernsegmentes eine in Längsrichtung verlaufende Nut 51 auf, in die beim Verstemmen das Gehäuse 3 drückt wird (symbolisch durch die Pfeile dargestellt). Das Gehäuse 3 kann so vor dem Vakuumimprägnieren fest mit dem Stator 2 verbunden werden.

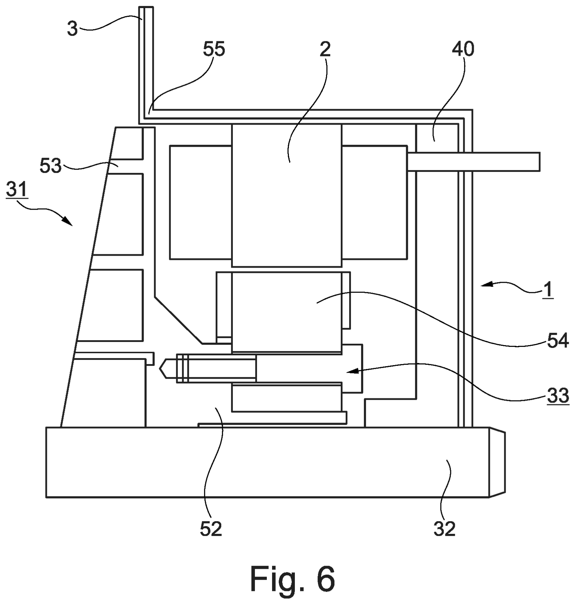

In der Figur 6 ist ein Schnitt durch eine Kühlmittelpumpe 31 mit einer Baugruppe 1 aus Stator 2 und Gehäuse 3 dargestellt. Wie zu Figur 5 beschrieben, wurde der Stator 2 mit dem Gehäuse 3 verstemmt und in das Gehäuse 3 eine Versteifungsscheibe 40 eingesetzt. Die Baugruppe 1 wurde mittels Vakuumimprägnieren von Harz, wie vorstehend beschrieben umgeben. Eine Laufachse 32 ist drehfest mit dem Gehäuse 3 und somit mittelbar mit dem Stator 2 verbunden. Die Rotorbaugruppe 33 ist drehbar auf der Laufachse 32 gelagert. Die Rotorbaugruppe 33 umfasst einen Rotoradapter 52, der die Laufachse 32 umfangseitig umgibt und an einem Ende ein offenes Flügelrad 53 ausbildet. Auf der Außenseite des Rotoradapters 52 sitzt ein Magnet-Rotor 54. Der Magnet-Rotor 54 ist an dem Rotoradapter 52 festgeschraubt. Das Gehäuse 3 des Motors kann optional von einem hier dargestellten Außengehäuse 55 umgeben sein.

## Patentansprüche

1. Elektrische Pumpe aufweisend ein Motorgehäuse (3), einen in dem Motorgehäuse (3) liegenden Stator (2) und eine von dem Stator (2) umfangseitig umgebende Rotorbaugruppe (33), **dadurch gekennzeichnet, dass** das Motorgehäuse (3) vakuumimprägniert ist und die Rotorbaugruppe (33) von einer stationären Laufachse (32) durchsetzt ist, die in das Motorgehäuse (3) oder in eine mit dem Motogehäuse (3) verbundene Versteifungsscheibe (15,40) eingepresst ist.

2. Elektrische Pumpe nach Anspruch 1, **dadurch gekennzeichnet, dass** das Motogehäuse (3) mittels Tiefziehen aus Stahlblech hergestellt ist.

3. Elektrische Pumpe nach Anspruch 2, **dadurch gekennzeichnet, dass** das Motorgehäuse (3) und der Stator (2) als Baugruppe (1) vakuumimprägniert sind.

4. Elektrische Pumpe nach einem der vorhergehenden Ansprüche, **dadurch gekennzeichnet, dass** eine Rotorbaugruppe (33) innerhalb des Stators (2) drehbar auf der Laufachse (32) gelagert ist und die Rotorbaugruppe (33) ein Flügelrad (34) und einen Magnetrotor (35) umfasst.

5. Elektrische Pumpe nach einem der vorhergehenden Ansprüche, **dadurch gekennzeichnet, dass** das Gehäuse (3) topfförmig mit einem Boden (5) und einer zylindrischen Mantelfläche (6) ist und der Boden (5) eine zentrale Vertiefung (25) mit einer durchsetzenden Öffnung (26) aufweist, wobei die Laufachse (32) in den durch die Vertiefung gebildeten Sitz eingepresst ist.

6. Elektrische Pumpe nach einem der vorhergehenden Ansprüche, **dadurch gekennzeichnet, dass** das Gehäuse (3) topfförmig mit einem Boden (5) und einer zylindrischen Mantelfläche (6) ist und der Boden (5) eine zentrale durchsetzende Öffnung (7) aufweist, wobei eine Versteifungsscheibe (15) auf der Außenseite des Bodens (5) liegt und mit einem kreisringförmigen Vorsprung (17) in die Öffnung (7) und in das Innere des Gehäuses (3) ragt, und wobei die Innenseite des kreisringförmigen Vorsprungs (17) einen Sitz ausbildet, in den die Laufachse (32) eingepresst ist.

7. Elektrische Pumpe nach einem der vorhergehenden Ansprüche, **dadurch gekennzeichnet, dass** das Gehäuse (3) topfförmig mit einem Boden (5) und einer zylindrischen Mantelfläche (6) ist und der Boden (5) eine zentrale durchsetzende Öffnung (7) aufweist, wobei eine Versteifungsscheibe (40) an der Innenseite des Bodens (5) liegt und einen nach innen ragenden kreisringförmigen Vorsprung (42) aufweist, wobei die Innenseite des kreisringförmigen Vorsprungs (42) einen Sitz ausbildet, in den die Laufachse (32) eingepresst ist.

8. Elektrische Pumpe nach einem der vorhergehenden Ansprüche, **dadurch gekennzeichnet, dass** die Versteifungsscheibe (15,40) mittig des kreisringförmigen Vorsprungs (17,42) eine durchsetzende Öffnung hat.

9. Elektrische Pumpe nach einem der vorhergehenden Ansprüche, **dadurch gekennzeichnet, dass** der Sitz der Laufachse (32) frei von Imprägniermittel gehalten ist.

10. Elektrische Pumpe nach einem der vorhergehenden Ansprüche, **dadurch gekennzeichnet, dass** ein magnetischer Luftspalt zwischen Stator (2) und Rotorbaugruppe (33) kleiner 0,6 mm ist.

11. Elektrische Pumpe nach einem der vorhergehenden Ansprüche, **dadurch gekennzeichnet, dass** mittels Kontaktierung der Laufachse (32) das Gehäuse (3) und der Stator (2) gemeinsam geerdet sind.

12. Verwendung einer elektrischen Pumpe (31) nach einem der vorhergehenden Ansprüche als Kühlmittelpumpe in einem Fahrzeug.
